(19) Europäisches Patentamt
European Patent Office
Office européen des brevets

(11) **EP 4 644 091 A1**

(12) **EUROPEAN PATENT APPLICATION**

(43) Date of publication:
**05.11.2025 Bulletin 2025/45**

(51) International Patent Classification (IPC):
***B29C 57/04*** *(2006.01)*

(21) Application number: 25173731.8

(22) Date of filing: **30.04.2025**

(52) Cooperative Patent Classification (CPC):
**B29C 57/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **02.05.2024 IT 202400009877**

(71) Applicant: **SICA S.P.A.
48011 Alfonsine (Ravenna) (IT)**

(72) Inventors:
• **TABANELLI, Giorgio
48033 Cotignola (RA) (IT)**
• **FILIPPI, Elisa
48011 Alfonsine (RA) (IT)**

(74) Representative: **Casadei, Barbara
Bugnion S.p.A.
Via di Corticella, 87
40128 Bologna (IT)**

(54) **MACHINE AND METHOD FOR BELLING PVC-O PIPES**

(57)    A belling machine comprising a forming station (600), the PVC-O pipes (1) each have an integral bell socket (3) formed on it and provided with a seat (6) for receiving a gasket (100);
the forming station (600) comprises a belling apparatus (40) for belling the end of the PVC-O pipe (1a) to be processed;
the apparatus (40) comprises forming means (59) for forming the end of the pipe (1a) into a bell socket and which comprise a mechanical mandrel (15), intended to be inserted into one end of the pipe (1a) and a shaping flange (14) for shaping at least part of the end of the pipe (1a);
the shaping flange (14) comprises an annular body (26) whose inside surface (27) defines, with the outside surface (36) of the mandrel (15), a shaping chamber (35) for shaping a portion of the bell socket (3a) being formed.

Fig.6

EP 4 644 091 A1

**Description**

This invention relates to a machine and a method for belling pipes made of PVC-O.

In the 1970's, the use of unplasticized polyvinyl chloride, known as PVC-U, became well established for the production of pressurized, solid wall water supply pipes.

Starting from the end of the 1990's processes were developed for the industrial production of solid wall pipes made of unplasticized polyvinyl chloride, known as biaxially oriented PVC or PVC-O.

PVC-O pipes are made using an extrusion process which allows orienting the long molecular chains of PVC. The bidirectional orientation, in the axial and circumferential directions of the pipe, improves the physical and mechanical properties of the material.

The orientation is obtained in an elastoplastic rheological state of the material, known technically as leathery state, attainable at a temperature higher than the glassy transition temperature of the PVC (Tg, approximately 80°C) but lower than the temperature that makes the material totally plastic (approximately 105°C).

Under these thermal and rheological conditions, a high force is applied to the pipe in both an axial direction and a circumferential direction, so as to increase the diameter of the pipe and, at the same time, lengthen it and reduce the thickness of the pipe wall.

The resulting orientation deformation of the pipe is known technically as axial orientation factor and circumferential orientation factor, respectively. Compared to the process of PVC-U pipe production by extrusion, the production of PVC-O pipes is much more complex and onerous. Compared to PVC-U, PVC-O has much higher tensile strength, fatigue strength and impact strength, and thus, despite the higher cost of production compared to PVC-U, pipes made of PVC-O, in certain fields of application, offer significant advantages over pipes made of PVC-U. Indeed, under equal conditions operating pressure and outside diameter of the pipe, the greater strength of the material allows obtaining thinner walled pipes.

The reduced thickness, besides defining a greater free flow cross section, is reflected in a lighter pipe weight, hence savings in material.

These properties have allowed the production of PVC-O pipes suitable for operating pressures of 25 Bar up to diameters of 630 mm. On the contrary, with pipes made of PVC-U, operating pressures cannot exceed 20 Bar up to diameters of 500 mm, and what is more, the pipe walls are thicker than those of corresponding pipes made of PVC-O.

Generally speaking, for operating pressures greater than 16 Bar, PVC-O pipes greater than 160 mm in diameter are more competitive than the corresponding PVC-U pipes.

For both PVC-U and PVC-O pipes, the most well-established and by far the most common form of pipe joint is the bell joint integral with the pipe. The bell is the socket at the enlarged end of one pipe into which the end of another pipe is inserted in order to join them to form a duct.

Normally, the bell has in its wide shape a seat in which is housed a gasket made of elastomeric material. The gasket ensures that bell joint is hermetically sealed.

The integral bell socket is formed by heating the pipe in what is commonly known as a belling machine.

In a belling machine, the cut pipe from the extrusion line is softened at one end in one or more heating stations. Thus, in a thermal state greater than that of the glassy transition temperature, the plastically deformable end of the pipe is then formed into the shape of a bell by a metal shaping tool in a forming station. The belled shape of the socket is stabilized by a final process step in which the bell socket is cooled on the shaping tool.

The efficacy of the hermetic seal of the bell joint is ensured by a high shape and dimensional precision of the inside surface of the socket; for this reason, the shaping tool is normally a metal spindle, commonly known as mandrel, which is inserted into the end of the pipe.

In PVC-U and PVC-O pipes, bell sockets with gasketed seat are made according to two different systems described briefly below.

The mechanical mandrel system in which the bell socket is formed on a metal spindle, commonly known as mechanical mandrel; the part of the mandrel which forms the gasket seat is provided with expandable mechanical inserts (segments) which are retracted and disappear into the body of the spindle when the spindle has to be extracted from the formed bell socket.

The Rieber system in which the bell socket is formed on a metallic mandrel and on a gasket previously installed in a recessed zone of the mandrel. The gasket is applied while the socket is being shaped and remains attached to the wall of the socket. Once the socket is cool and the gasket fixed to it, the mandrel is extracted from the socket and the end result is a pipe with an integral bell socket complete with unremovable gasket.

The process of hot belling PVC-U pipes occurs with the pipe in a substantially plastic rheological state, and the action which forms the bell socket against the shaping tool is compressed air outside the pipe or a vacuum inside the pipe.

On the contrary, as stated above, in PVC-O pipes, the belling process occurs with the pipe in an elastoplastic (leathery) state, and the action which forms the bell socket against the shaping tool is the spontaneous contraction of the oriented molecules. The force developed during contraction, besides being very high, is difficult to control during the step of shaping the bell socket because it depends on the variability of the thickness and thermal state of the pipe wall.

In order to be functional and repeatable, methods for belling PVC-O pipes must not only overcome the high resistance encountered by the mandrel when it is inserted into the pipe but must also produce a precise thermal state at the end of the pipe; significant examples of the methods are described in patent documents EP0930148, WO2022214980 and WO2022214986.

In particular, for defined types of gaskets (also commonly used in corresponding pipes made of PVC-U) the bell sockets made with the methods and apparatuses described in those documents are effectively functional in terms of both joint seal and hydrostatic pressure resistance. In the bell socket, the resistance is greater than or equal to the resistance of the PVC-O pipe on which the bell socket itself is formed.

The belling machine for PVC-O pipes with mechanical mandrel system splits up the pipe process into different stations.

The first station, called the pipe feeding station, is the one where the cut pipe is picked up from the extrusion line and positioned in the belling machine.

After the feeding station, the pipe, which is supported horizontally, is moved transversely first into the heating stations and then into the bell socket forming station.

In the forming station, the bell socket, besides being fully formed at the heated end of the pipe, is also cooled while it is still on the mandrel.

A typical configuration of a belling machine for PVC-O pipes comprises two heating stations, the first of which, normally equipped with a hot air oven, raises the temperature of the end of the pipe to temperatures close to, but lower than, the glassy transition temperature of the PVC so as to avoid pipe contraction phenomena.

The next station is equipped with a contact oven like that described in document EP0930148.

The oven performs the final heating of the end of the pipe in a differentiated manner along the longitudinal direction of the pipe. While it is being heated, the end of the pipe is supported internally by an internal hearting element which prevents diametrical contraction of the pipe. At the end of the heating step, the temperature of the pipe is approximately 97°C towards the end of it and decreases to 80°C in the zone which will constitute the tapering wall fitting between pipe and bell socket. When heating is over, the end of the pipe is extracted from the contact oven and is free to contract radially and axially. With the aforementioned thermal state, spontaneous contraction causes the heated end of the pipe to adopt a typical nose cone shape.

With this heated end profile, the pipe is moved into the forming station. In this station, the pipe is held firmly in place by a clamp and the mandrel is inserted into the end of the pipe.

The clamp holds the pipe in a horizontal position so that the longitudinal axis of the pipe coincides with the movement axis of the bell socket forming means, that is to say, mandrel and shaping flange.

The mandrel gives the bell socket its shape but, at the same time, circumferentially dilates the pipe, restoring and increasing the circumferential orientation of the material so as to also make up for the loss of axial orientation. More in detail, the bell socket forming apparatus, with which the forming station is equipped and which must be replaced when changing over to another size of pipe to be belled, comprises the pipe clamp, the mandrel and the shaping flange.

The forming means, that is, the mandrel and the shaping flange, are mounted on a carriage which is moved by actuating means. The flange is a hollow cylindrical element made of metal which can be moved by actuators independently of the mandrel and the forming carriage. As it moves, the flange remains coaxial with the mandrel and slides over the mandrel with its inside surface contiguous with the cylindrical outside surface of the mandrel.

The mandrel is heated, for example by a strip heating element which transmits heat by contact. Optimum mandrel temperatures for the belling process are included in the 45°-55°C range, hence lower than the glassy transition temperature of the PVC.

Well-established PVC-O pipe belling machines, which adopt the mechanical mandrel work process as described in document EP0930148, are applied extensively especially when pipe wall thicknesses are relatively large, as in pipes intended for operating pressures greater than 12.5 Bar and up to 25 Bar.

As described above, these belling machines, besides using apparatuses comprising the clamps, and the expandable segment mandrel, are distinguished by the use of another element which is known as "shaping flange" in the technical jargon of the trade.

In brief, the shaping flange is a metallic collar which is slidable on the mandrel and whose main function in the bell socket forming process is that of applying a mechanical compressive action against the end edge of the bell socket being formed, what is known as the pipe edge shaping action. This action, besides levelling and smoothing the end edge of the bell socket, makes the pipe wall adhere better to the mandrel in the gasket seat zone, with the advantageous effect of making a bell socket whose shape is a positive copy of the shape of the mandrel in the gasket seat zone.

In effect, since the belled material is in a hot, elastoplastic rheological state, the mechanical response of the pipe wall only to the spontaneous contraction induced by the orientation, precisely because of the elastic behaviour, would make it difficult for the pipe wall to adhere perfectly to the curved surfaces of the mandrel.

In particular, the most critical zones are those of the gasket seat, which is characterized by radius shaped surfaces with small curvature radiuses.

In these zones, contact between pipe wall and mandrel, hence the full profile of the gasket seat, can be obtained only with the contribution of the mechanical action of the shaping flange.

However, the normal variability of the pipe wall thickness which occurs during the pipe extrusion process makes the action of the flange less effective.

For example, the minimum nominal wall thickness of a PVC-O pipe for a pressure of 25 Bar and having an outside diameter of 400 mm is 13.7 mm and, under normal production conditions, the thickness of the pipe wall may vary up to 15.3 mm.

The diameter of the pipe may vary from 400.0 mm to 401.2 mm.

This variability means that the spontaneous contraction of the pipe due to orientation is irregularly distributed in the geometry of the pipe and is not repeatable.

The non-repeatability makes it impossible to define in advance the right relative longitudinal position between the mandrel and the heated end of the pipe where the bell socket is to be formed. For this reason, the movement by which the mandrel is inserted into the end of the pipe includes a stop at the forming position controlled by an electromechanical "feeler" device which detects the end edge of the pipe.

The "feeler" device comprises a rod having one end protruding from the front surface of the shaping flange and intended to "feel" the end edge of the pipe and the other end intended to activate a microswitch.

When the edge of the bell socket being formed comes into contact with the feeler, the feeler is pushed back and activates a sensor which produces a signal instructing the mandrel to stop.

It is only in this condition, when the flange front has interacted with the edge of the bell socket, that the shaping flange can be moved to create the compressive action which shapes the edge of the bell socket.

The shaping action cannot be too strong because it may have as a negative effect an expansion deformation on the pipe in the zone at the top of the gasket seat and in the zones at the sides of the seat. Expansion of the pipe wall may lead to its adhering less to the mandrel, causing the diameter of the gasket seat in the bell socket to become larger than allowed, thus inevitably compromising the correct positioning of the gasket.

For some bell socket shapes, a possible solution is to configure the shaping flange in such a way as to apply a double compressive action: on the end edge of the bell socket being formed and on the outer lateral surface of the gasket seat wall facing the bell socket edge. This solution has the disadvantage that the right interaction between the action of the flange on the bell socket edge and on the lateral surface of the gasket seat is always difficult to control, its efficacy being influenced by the variability of the wall thickness.

This disadvantage remains even if complex mechanisms are introduced to make the actions of shaping the edge of the bell socket edge and of shaping the side wall of the gasket seat independent of each other.

If the action of the shaping flange on the side wall of the gasket seat is applied simultaneously with or after the action on the bell socket edge, there is still the disadvantage of the top wall of the gasket seat being deformed as a result of the compressive action of the flange on the bell socket edge. If the action of the flange on the side wall is applied before the action on the front edge of the bell socket, the action on the front edge of the bell socket produces a permanent deformation in the wall of the bell socket edge.

Deformation is a serious defect because it alters the required cylindrical shape and the corresponding dimension of the inside diameter of this part of the bell socket, whose precise internal dimension is necessary for the operability of the bell joint (in terms of the effectiveness of the gasket seal and of the gasket being held properly in place in its seat.

The disadvantages described are even worse in the case of thick walled pipes intended for operating pressures greater than 16 Bar, so much so that, for certain types of gaskets, the corresponding seat in the bell socket cannot be made according to specified functional conformity requirements, which means that production of a pipe with integral bell joint is not possible.

Another aim of this invention is to provide a machine and a method for belling PVC-O pipes applicable in a mechanical mandrel system.

The apparatus according to the invention overcomes the disadvantages of the prior art described above.

It is therefore effective in precisely defining the shape of the gasket seat and particularly advantageous if applied to PVC-O pipes whose wall thickness is relatively large with respect to the pipe diameter, that is to say, to pipes intended for operating pressures greater than or equal to 16 Bar and at least up to 25 Bar.

As is evident from independent claim 1, the technical feature that characterizes the machine of the invention is a shaping flange with a distinctive configuration and whose movement relative to the mandrel necessitates a corresponding belling method involving a single actuating action.

The advantages and variants of the configuration of the flange of the invention are set out in detail hereinafter in the description of the invention. The technical characteristics of the invention are clearly described in the claims below and its advantages are apparent from the detailed description which follows, with reference to the accompanying drawings which illustrate a preferred embodiment of the invention provided merely by way of example without restricting the scope of the inventive concept, and in which:

- Figure 1 is a schematic cross sectional view of a PVC-O pipe with integral bell socket with a radiused trapezoidal seat (Z-joint) for housing a respective gasket;
- Figure 1a is a schematic cross sectional view of the pipe of Figure 1, with gasket;
- Figure 1b is a schematic cross sectional view of the pipe of Figure 1, with bell socket joining it to another pipe;

- Figure 2 is a schematic cross sectional view of a PVC-O pipe with integral bell socket with a seat for housing a radiused triangular gasket (Anger-Lock);
- Figure 2a is a schematic cross sectional view of the pipe of Figure 2, with gasket;
- Figure 2b is a schematic cross sectional view of the pipe of Figure 2, with bell socket joining it to another pipe;
- Figure 3 is a schematic cross sectional view of a PVC-O pipe with integral bell socket with a radiused trapezoidal seat (Z-joint) for housing a respective gasket and with some dimensional parameters indicated;
- Figure 4 is a schematic perspective view of a shaping flange according to this invention;
- Figure 4a is a schematic perspective cross section of the shaping flange of Figure 4;

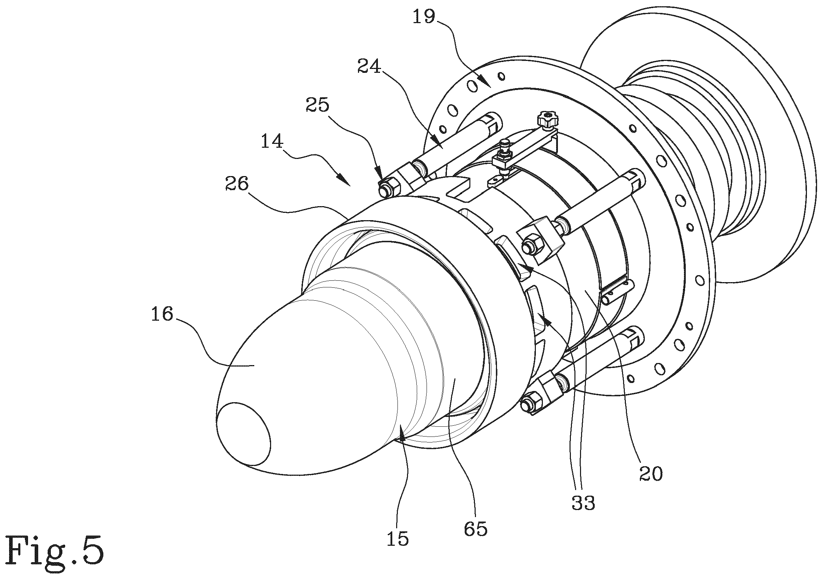

- Figure 5 is a schematic perspective view of the shaping flange and of a mechanical mandrel defining means for forming a bell socket;
- Figure 6 is a schematic cross sectional view of Figure 5;
- Figure 6a is a scaled-up view of a detail from Figure 6;
- Figure 7 illustrates the detail of Figure 6a at the moment of first contact between pipe bell socket edge and end of feeler needle;
- Figure 8 is a schematic cross sectional view of Figure 5 at the moment the mandrel stop sensor is activated;
- Figure 9 is schematic cross sectional view of Figure 5 at the moment of first contact between bell socket edge and flat end of the shaping flange;
- Figure 10 is schematic cross sectional view of Figure 5 at the moment the end of the shaping stroke is reached, hence with the bell socket fully formed by the mandrel and the shaping flange;
- Figure 11 is an alternative form of Figure 10 with a bell socket of Anger-Lock type;
- Figure 12 is a schematic plan view of the belling machine;
- Figure 13 is a schematic side view of a belling apparatus mounted in a forming station of the belling machine;
- Figures 14A-14R illustrate a sequence of steps representing the belling method of this invention in schematic side views partly in cross section. With reference to the accompanying drawings, the numeral 1 denotes a PVC-O pipe.

The pipe 1 extends predominantly along a longitudinal axis L.

The pipe 1 has a tubular portion 2 smoothly merging with an integral bell socket 3.

At the bell socket 3 there is a seat 6 for housing a gasket 100.

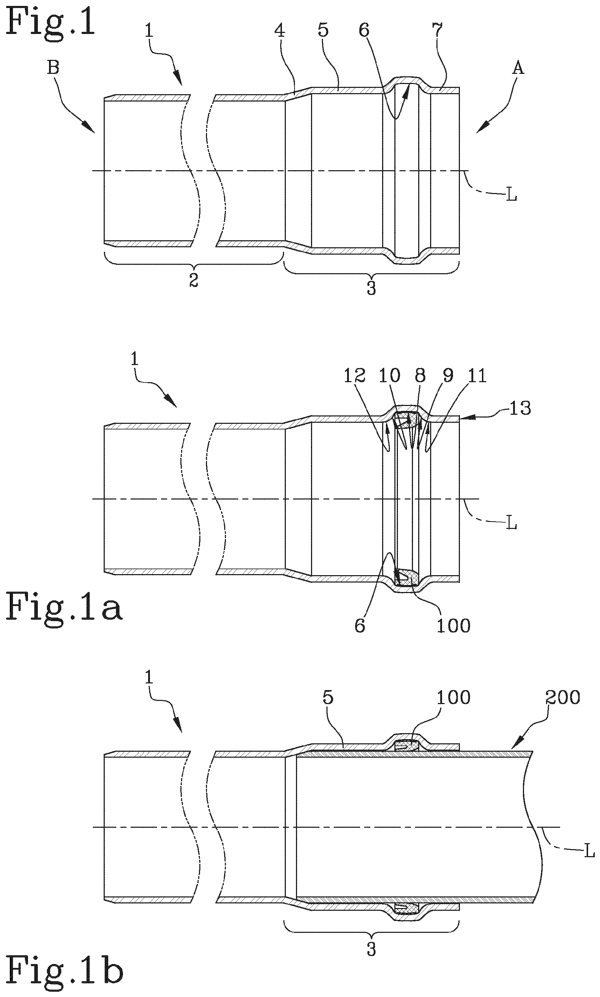

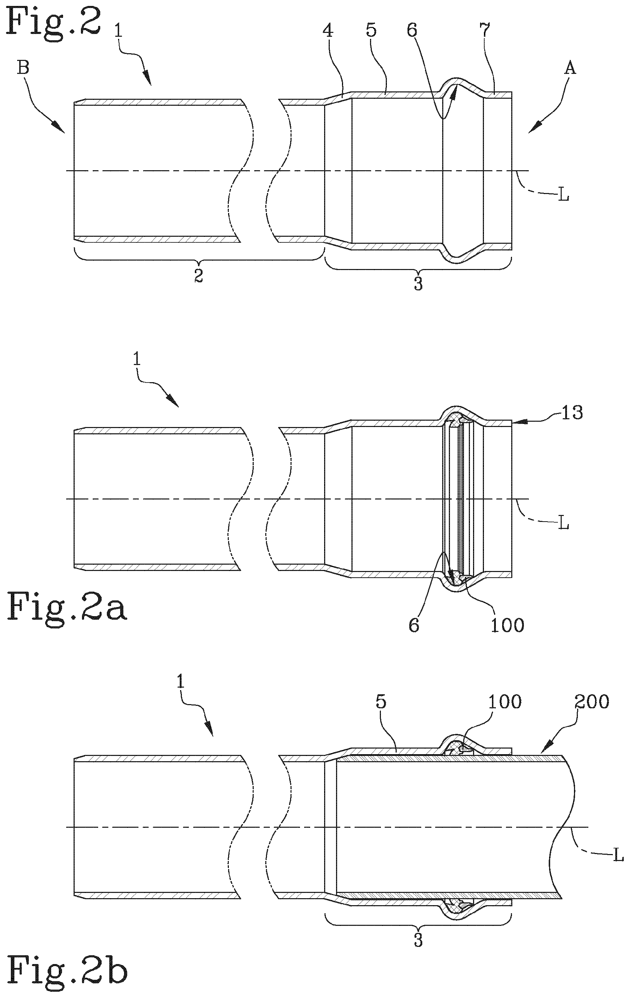

The gasket 100 is not of a limited type, as may be inferred from Figures 1a and 2a.

The bell socket 3 has a bell socket edge 7, also called socket mouth, a cylindrical portion 5, intended to contain a pipe 200 joined to it by the bell socket 3 including the seat 6 which houses the gasket 100 (see Figures 1b and 2b), and a tapering portion 4.

The cylindrical portion 5 is also called cylindrical bell socket.

The bell socket 3 has an end edge 13.

For convenience of description, the pipe 1 illustrated has two ends, labelled A an B in the drawings.

The end A of the pipe 1 is provided with the bell socket 3.

In particular, the invention is applicable to the production of integral bell sockets 3 in PVC-O pipes 1 in the most common and long-standing forms of bell socket 3 used in the technical field of pressurized water distribution pipe systems, such as:

a) bell socket 3 inclusive of seat 6 for a gasket 100 of radiused trapezoidal shape, known in the technical field by the term "Z-joint bell socket" (see Figures 1, 1a, 1b);
b) bell socket 3 inclusive of seat 6 for a gasket 100 of radiused triangular shape, known in the technical field by the term "Anger-Lock bell socket" (see Figures 2, 2a, 2b).

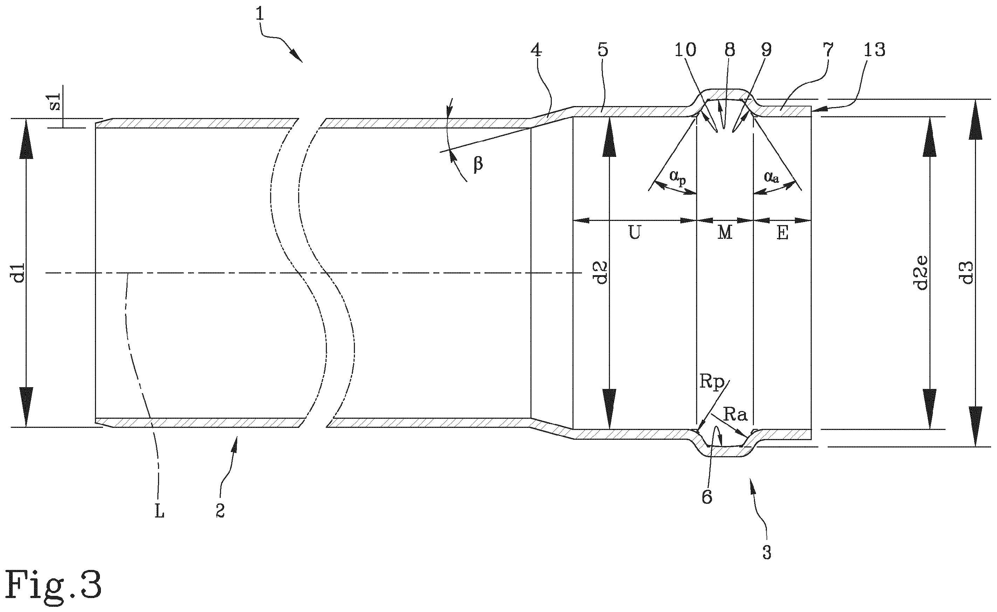

Figure 3 shows the dimensional reference parameters, listed below, which define the shape and size of the pipe 1 with integral bell socket 3 in the "Z-joint bell socket" variant.

- $d1$ = outside diameter of the tubular portion 2 of the pipe 1
- $s1$ = wall thickness of the tubular portion 2 of the pipe 1
- $d2$ = inside diameter of the bell socket 3 (up to the gasket seat 6)
- $d2e$ = inside diameter of the bell socket edge 7
- $d3$ = inside diameter of the gasket seat 6
- $E$ = length of the bell socket edge 7
- $M$ = length of the gasket seat 6
- $U$ = length of the cylindrical bell socket 5 up to the gasket seat
- $Ra$ = inside connecting radius between the front side wall 9 of the gasket seat 6 and the bell socket edge 7
- $Rp$ = inside connecting radius between the rear side wall 10 of the gasket seat and the cylindrical portion 5 of the bell socket 3
- $\alpha a$ = inclination angle of the front side wall 9 of the gasket seat 6
- $\alpha p$ = inclination angle of the rear side wall 10 of the gasket seat 6
- $\beta$ - taper angle of the tapering portion 4 of the bell socket 3

The bell socket edge 7, or socket mouth, is cylindrical in shape, with an inside diameter d2e which is greater than the outside diameter d1 of the tubular portion 2 and terminates with the flat end surface 13 of the bell socket 3, perpendicular to the axis L of the pipe 1.

With reference to the "Z-joint bell socket" variant, the seat 6 of the gasket 100 has a trapezoidal symmetrical shape, where the minor base has a limited curvature and is connected to the inclined sides of the trapezium. The seat 6 has an end wall 8 intended to contain the gasket 100.

The end wall 8, defined by the minor base of the trapezoidal shape, defines a containing ceiling with inside diameter d3.

The end wall 8 is connected to the inclined side walls 9, 10 intended to contain the gasket 100.

The inclined side walls 9, 10, front and rear relative to the bell socket edge 7, merge into respective connecting walls 11, 12 at the bell socket edge 7 and at the cylindrical portion 5 of the bell socket 3.

The cylindrical portion 5 of the bell socket 3 has an inside diameter d2 which is greater than the outside diameter d1 of the tubular portion 2, where the value of d2 is normally equal to or slightly less than the inside diameter d2e of the edge 7 of the bell socket 3.

The tapering portion 4 of the bell socket 3 has a taper angle $\beta$ normally included between 9° and 15°.

With reference to the aforesaid parameters which define the shape and size of the bell socket 3, the bell socket 3 is functionally conformant only if the values of the dimensional reference parameters fall within specified restricted ranges.

It is noted that for the same outside diameter d1 of the tubular portion 2, the operating pressure determined for the pipe 1 defines the wall thickness s1 of the pipe 1.

Irrespective of the operating pressure, hence of the thickness value s1, the inside dimensions of the bell socket 3 which define the functional conformity of the pipe 1 with integral bell socket 3 remain unchanged. Shown below by way of example are typical dimensions of two sizes of pipe 1 with "Z-joint bell socket".

The example shows pipes 1 having the same outside diameter, one intended for water distribution at an operating pressure (PN) of 12.5 Bar, and the other intended for water distribution at an operating pressure (PN) of 16 Bar.

PVC-O pipe with integral bell socket of PVC-O Z-joint type for operating pressures up to 12.5 Bar (PN12.5)

- d1= outside diameter of the pipe=222+0.6
- s1= pipe wall thickness= 5.4+0.75
- d2= inside diameter of the bell socket (up to the gasket seat)=222.8+1.2
- d2e= inside diameter of the bell socket edge=222.8+1.2
- d3= inside diameter of the gasket seat=247.7+1.4
- E= length of the bell socket edge=41.5
- M= length of the gasket seat=40.7

- U= length of the cylindrical bell socket up to the gasket seat=88.5
- Ra= inside connecting radius between the front side wall of the gasket seat and the bell socket edge =14.0 $\pm 2$
- Rp= inside connecting radius between the rear side wall of the gasket seat and the bell socket edge=14.0 $\pm 2$
- $\alpha$a= inclination angle of the front side wall of the gasket seat=33°$\pm 4$°
- $\alpha$p= inclination angle of the rear side wall of the gasket seat=33°$\pm 4$°
- $\beta$= taper angle of the tapering portion of the bell socket≈15° PVC-O pipe with integral bell socket of PVC-O Z-joint type for operating pressures up to 16 Bar (PN16)
- d1= outside diameter of the pipe 1 = 222 +0.6
- s1= wall thickness of the pipe 1 = 6.2+0.9
- d2= inside diameter of the bell socket 3 (up to the gasket seat 6)=222.8+1.2
- d2e= inside diameter of the bell socket edge 7 = 222.8+1.2
- d3= inside diameter of the gasket seat 6 = 247.7+1.4
- E= length of the bell socket edge 7 = 41.5
- M= length of the gasket seat 6 = 40.7
- U= length of the cylindrical portion 5 of the bell socket 3 up to the gasket seat=88.5
- Ra= inside connecting radius between the front side wall 9 of the gasket seat 6 and the bell socket edge 7 = 14.0$\pm 2$
- Rp= inside connecting radius between the rear side wall 10 of the gasket seat 6 and the cylindrical portion 5 of the bell socket 3 = 14.0$\pm 2$
- $\alpha$a= inclination angle of the front side wall 9 of the gasket seat 6 = 33°$\pm 4$°
- $\alpha$p= inclination angle of the rear side wall 10 of the gasket seat 6 = 33°$\pm 4$°
- $\beta$- taper angle of the tapering portion 4 of the bell socket 3 ≈15°

As reported in the prior art, with the prior art belling methods, the mechanical mandrel system may be effective for pipes having a relatively small thickness s1, such as the PN12.5 of the example.

On the contrary, in the PN16 size, as also reported in the prior art, it is difficult to reproduce the bell socket 3 with the shape specified for functional conformity.

In particular, with reference to the prior art, the shaping action needed to juxtapose the bell socket edge 7 to the seat 6 of the gasket 100, that is to say, to obtain the acceptable conformity values for Ra and $\alpha$a, has the effect of partially detaching the bell socket 3 while it is being formed at the bell socket edge 7, and at the front and rear end wall 8 of the seat 6 of the gasket 100.

The final effect is that in the finished bell socket 3, the values of d3, d2e, $\alpha$p and Rp are larger than the acceptable values.

In such conditions, the pipe 1 with integral bell socket 3 is not usable in that there is no guarantee that it is hermetically sealed, nor that the gasket 100 will remain in place when the pipe is installed.

The idea behind the invention was to overcome this process defect by providing a belling machine 300 comprising a feed station 400 for feeding PVC-O pipes 1a to be processed, one or more heating stations 500 for heating one of the ends of the PVC-O pipe 1a to be processed and a forming station 600 for forming the bell socket at the heated end of the PVC-O pipe 1a.

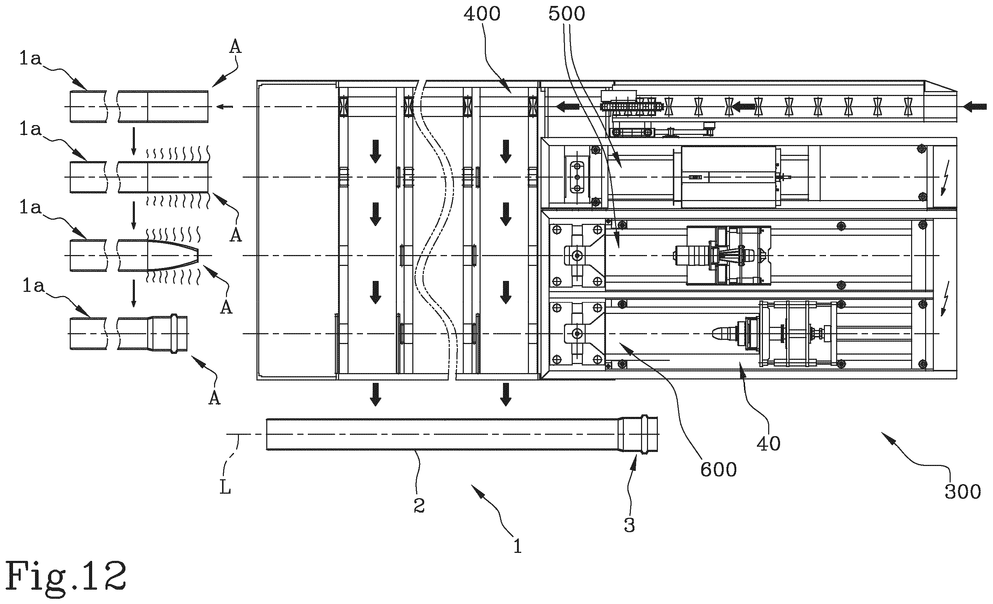

When it leaves the forming station 600, the PVC-O pipe 1 is processed, as shown in Figure 12.

It is noted that the reference numerals of the PVC-O pipe before it processed are the same as those of the PVC-O pipe 1 after it is processed (that is, with the bell socket formed on it) but with the letter a added to the reference numeral.

The pipe feeding station 400 is the one where the cut pipe 1a is picked up from the extrusion line and positioned in the belling machine 300.

After the feeding station 400, the pipe 1a, which is supported horizontally, is moved transversely first into the heating stations 500 and then into the bell socket forming station 600.

In the forming station 600, the bell socket is formed at the heated end of the pipe 1a and, when fully formed, is also cooled.

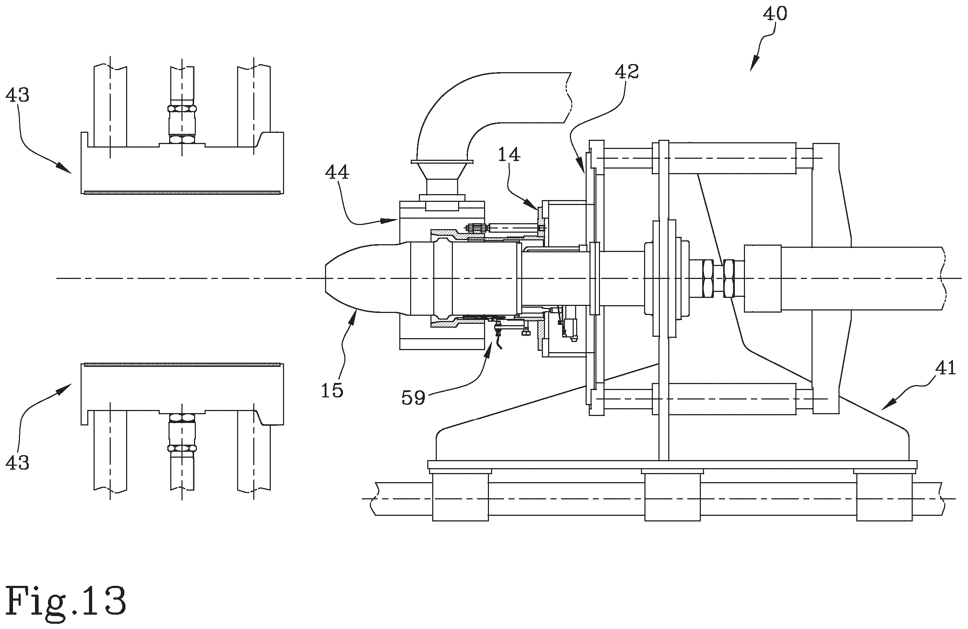

In the forming station 600 there is a belling apparatus 40, schematically represented in Figure 13.

The belling apparatus 40 comprises forming means 59.

The axis of the pipe 1a being formed coincides with the axis of the forming means 59.

The forming means 59 comprise a mechanical mandrel 15, with an axis 15a and intended to be inserted into one end A of the pipe 1a, and a shaping flange 14, described in more detail hereinafter in that it is an object of this invention.

The belling apparatus 40 comprises a forming carriage 41 movable towards and away from a PVC-O pipe 1a to be processed, and clamping means 43 for holding the PVC-O pipe 1a in place.

The forming means 59 are mounted on and supported by the forming carriage 41.

The mandrel 15 has a tip 16 and segments 17, movable from a retracted, rest position to an extended position (and vice versa).

The tip 16 is defined by a tapering portion of the mandrel 15.

The segments 17 are disposed on a cylindrical portion of the mandrel 15. The expandable segments 17 define an annular portion 64 extending from the cylindrical portion 65 of the mandrel 15.

Said annular portion 64 has an end wall 66, a front fitting 67 and a rear fitting 68, relative to the tip 16 and to the cylindrical surface 65 of the mandrel 15.

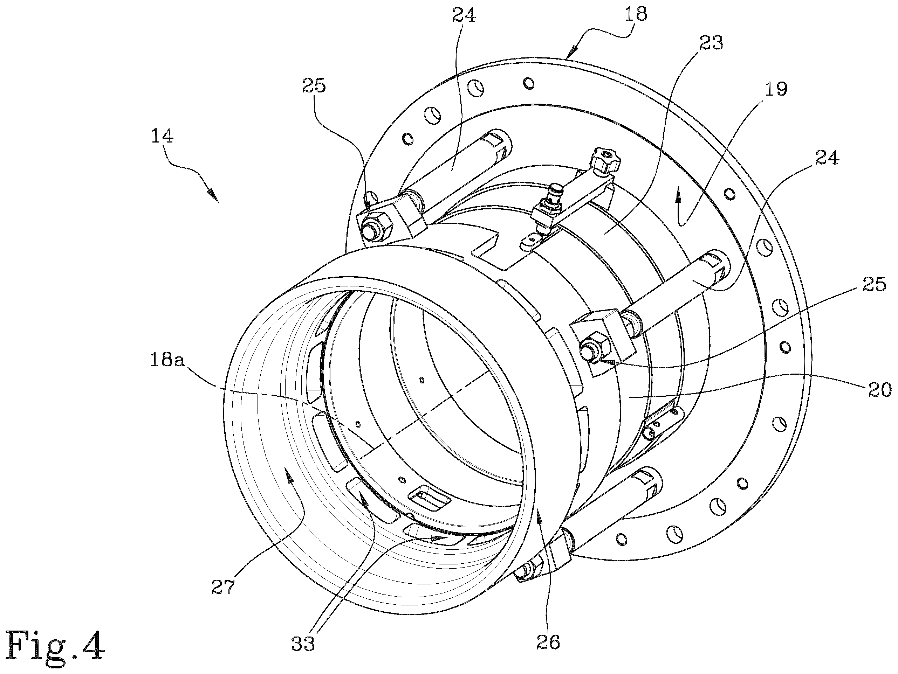

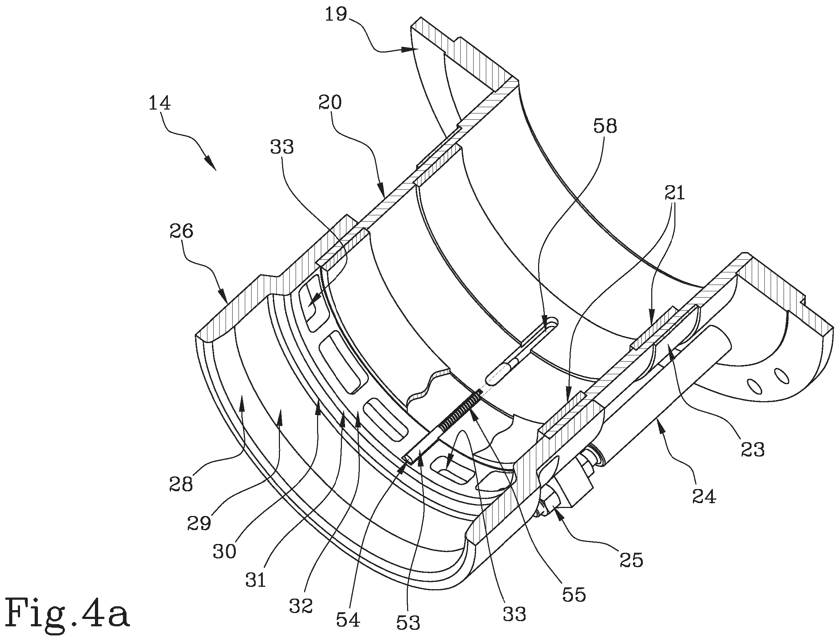

The shaping flange 14, see Figure 4, has a configuration which is suitable for shaping part of the end A of the pipe 1a with the bell socket 3a being formed on it, while at the same time containing portions of the wall of the bell socket 3a to prevent them from deforming and coming detached from the outside surface 36b of the mandrel 15.

A strip heating element 23 is positioned in contact with the flange 14 to transmit heat by contact, thus heating the mandrel 15.

In short, the innovative shaping flange 14 performs a multiplicity of actions, listed below.

- A compressive action, thereby shaping the material, on the end 13a of the bell socket edge 7a being formed.
- A compressive action, thereby shaping the material, on the inclined front wall 9a of the seat 6a of the gasket 100 of the bell socket 3a.
- A containing action on the outside surface of the bell socket edge 7a.
- A containing action on the end wall 8a of the seat 6a of the gasket 100. Together with the above listed shaping and containing functions, the configuration of the shaping flange 14 performs a further function, which is that of guiding the walls of the pipe 1a while the mandrel 15 is inserted into the end A of the pipe 1a.

These functions, together with the containing actions listed above, contribute in an effective and innovative manner to improve the adherence of the inside surface of the pipe 1a being formed to the outside surface 36 of the mandrel 15.

The shaping flange 14 comprises a main body 18 which extends around its axis 18a.

The axis 18a, as may be more easily inferred below, coincides with the axis 15a of the mandrel 15.

The shaping flange 14 has a flat wall 19, in the shape of a disc.

The forming carriage 41 comprises a movable part 42 which supports the shaping flange 14.

Fastening means, not illustrated, connect the flat wall 19 to the movable part 42 of the forming carriage 41.

The movable part 42 of the forming carriage 41 is connected to an electronic position transducer (not illustrated) which continuously detects the position of the shaping flange 14 relative to the mandrel 15.

A control and drive unit 60 is configured to receive an output position signal output generated by the electronic transducer.

A cylindrical collar 20 coaxial with the mandrel 15 extends from the flat wall 19 of the flange 14.

At least one bush 21 for guiding and coupling the mandrel 15, in particular a pair of bushes 21, is interposed between the mandrel and the cylindrical collar 20.

The cylindrical collar has a flat front end 22 intended to interact with the end edge 13a of the bell socket 3a being formed.

The flat end edge 22 lies in a positioning plane orthogonal to the axis of the cylindrical collar 20, coaxial with the mandrel 15.

At the flat wall 19 of the flange 14 there is a plurality of columns 24.

The columns 24 extend in a direction parallel to the axis of the cylindrical collar 20.

The columns 24 support a funnel-shaped annular body 26 which, for convenience of description, is hereinafter termed "funnel". The funnel 26 has annular inside surfaces 27 intended to interact with and press against the front side wall 9a of the seat 6a of the gasket 100, to contain the bell socket edge 7a and to contain the end wall 8a of the seat 6a of the gasket 100.

The inside surfaces 27 of the funnel 26 have a trumpet-shaped mouth 28, convergent inwardly and divergent outwardly, connected seamlessly to a first cylindrical surface 29 for containing the end wall 8a of the seat 6a of the gasket 100 (Figure 4a).

The first cylindrical surface 29 is followed by a tapering surface 30 interacting with the front side wall 9a of the seat 6a of the gasket 100.

A second cylindrical surface 32 intended to contain the bell socket edge 7 is connected by a curved fitting 31 convergent towards the tapering surface 30.

It should be borne in mind that the funnel 26 is connected removably to the main body 18 of the shaping flange 14.

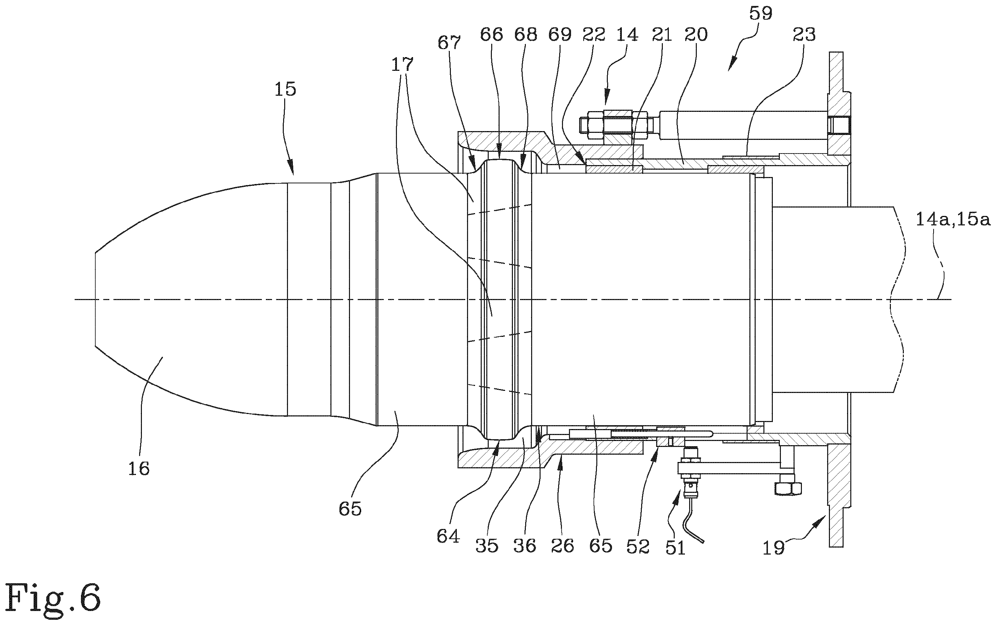

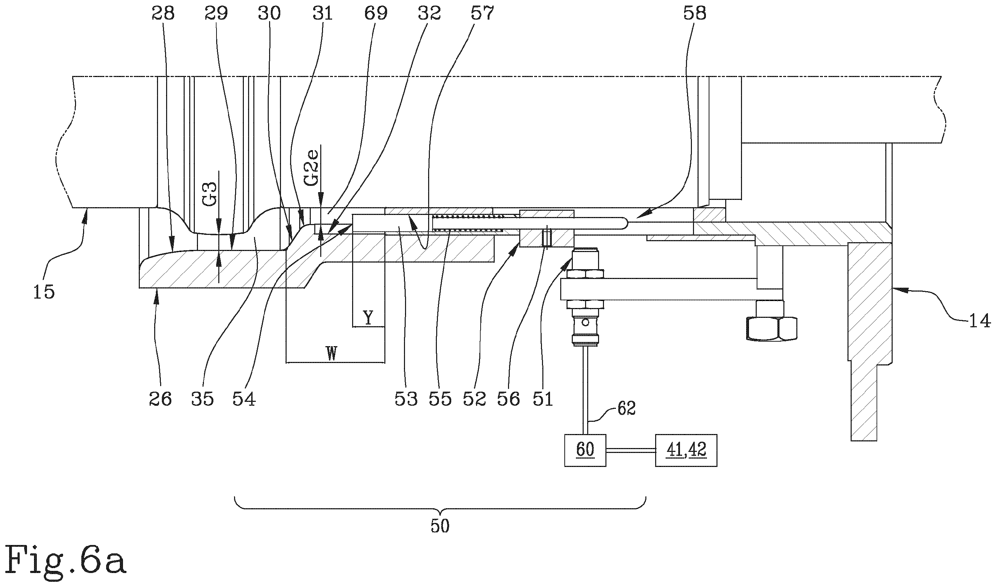

Moreover, the relative axial positioning labelled W in Figure 6a, being the distance between the front end 22 of the shaping flange 14 and the inside surfaces 27 of the funnel 26, is obtainable during installation of the apparatus 40.

The reference of the inside surfaces 27 of the funnel 26 corresponds to the end of the cylindrical surface for containing the outside face of the end wall 8a of the seat 6a of the gasket 100.

In the example, the fastening between the funnel 26 and the main body 18 of the shaping flange 14 is achieved by nuts 25 applied to the threaded ends of the columns 24 as well as by a slidable centred coupling between coaxial cylindrical surfaces of the funnel 26 and of the cylindrical collar 20. The funnel 26 has a plurality of through openings 33 disposed circumferentially along the second cylindrical surface 32.

This makes for more efficient cooling of the formed bell socket 3 on the mandrel 15.

The shaping flange 14 according to this invention comprises an electromechanical device 50 designed to control the relative position between the mandrel 15 and the end 13a of the pipe 1a to be processed to form the bell socket 3 (Figure 6 and Figure 6a).

The shaping flange 14 has a circular compartment 57 which extends in an axial direction parallel to the axis 18a of the main body 18.

The compartment 57 houses a contact sensor 53, in the form of a piston-like sensor.

The free front 54 of the contact sensor 53 protrudes from the flat front end 22 of the cylindrical collar 20 by a length Y.

Elastic means 55, in the form of a compression spring, are applied to the contact sensor 53.

The elastic means 55 are applied at the opposite end of the contact sensor 53 to a perpendicular surface delimiting the compartment 57.

The elastic means 55 keep the contact sensor 53 at the rest position.

The extension of the elastic means 55 is limited by cam means 52, disposed coaxially with the contact sensor 53.

At the wall of the cylindrical collar 20 there is an open slot 58.

The cam means 52, connected to the contact sensor 53, are free to slide in the slot 58.

The aforementioned length Y by which the free front 54 of the contact sensor 53 protrudes from the flat front end 22 of the cylindrical collar 20 is calibrated by the positioning of the cam means 52 in the slot 58 and, consequently, by the extension of the elastic means 55.

Fastening means 56 constrain the cam means 52 to a corresponding position in the slot 58.

Another function of the cam means 52 is that of activating the sensor 51 whose activation signal 62 is sent to the control and drive unit 60.

After receiving the activation signal 62, the control and drive unit 60 instructs the mandrel 15 to stop moving relative to the pipe 1a to be processed.

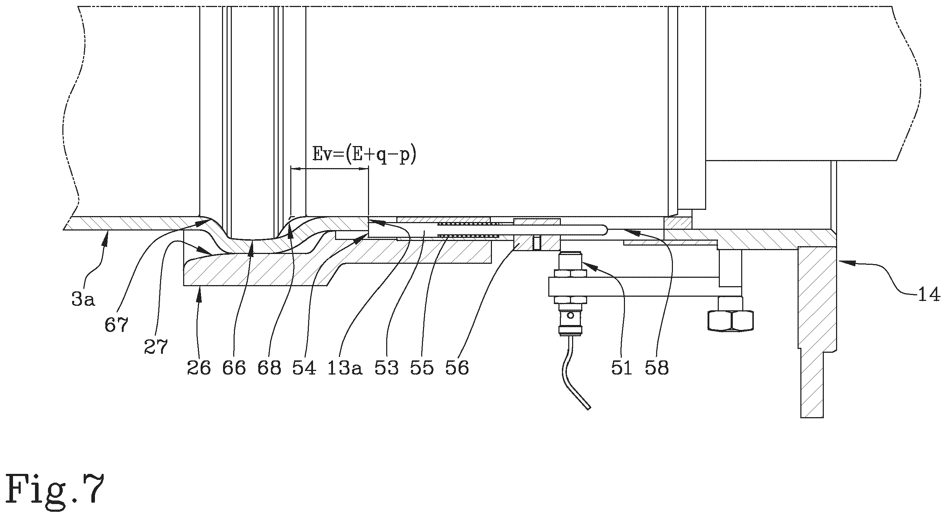

In use, when the head of the contact sensor 53 interferes with the edge of the pipe 1a to be processed (Figure 7), the contact sensor 53 withdraws and thus moves the cam means 52 as one with it until they interact with and activate the sensor 51.

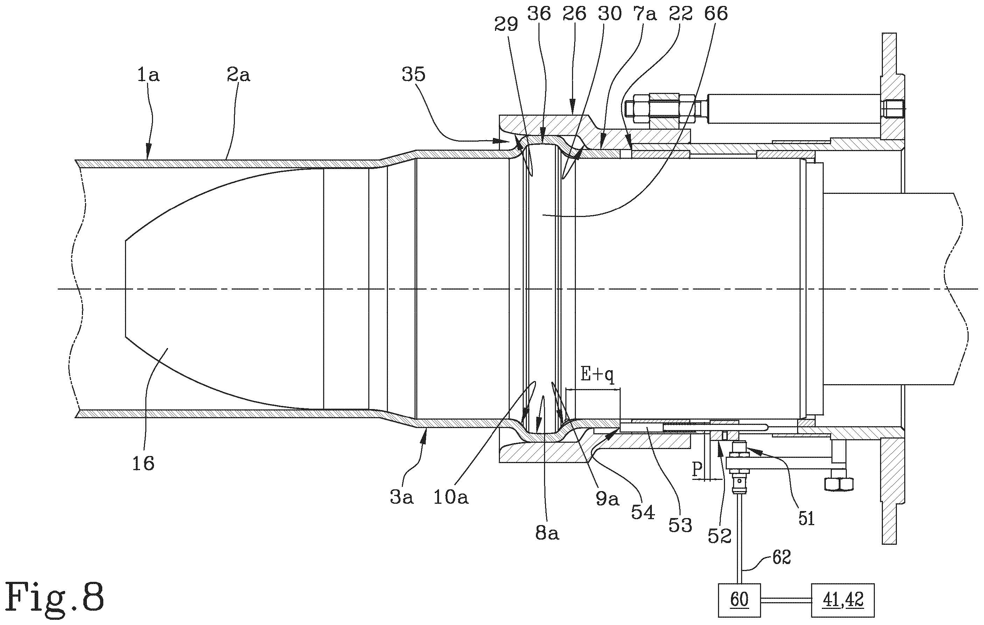

Activation occurs when it has withdrawn by a stroke of length "P" (Figure 8).

Irrespective of the type of activation sensor 51, the sensor 51 must allow the contact sensor 53 to withdraw further after activating the command which stops the mandrel 15.

This further movement is due to the advancing of the shaping flange 14, at least until the end edge 13a of the bell socket 3a being formed comes into full contact with the flat front end 22 of the cylindrical collar 20.

For this purpose, a suitable type of activation sensor 51, without thereby losing in generality, is what is known as inductive proximity sensor.

In effect, the cam means 52 activate the sensor 51 without coming into contact with it, but by interference with the magnetic field generated by the sensor.

In order to be able to interact with the inductive sensor, the cam means 51 are made of ferromagnetic material (for example, carbon steel). Alternatively, the sensor 51 may be an electromechanical microswitch with lever and wheel.

At the belling station 600, the mandrel 15 is inserted into the pipe 1a with the shaping flange 14 at a position, relative to the mandrel 15, where the contact sensor 53, considered at the position where it activates the sensor 51, is at what will be the position of the end edge 13a of the bell socket 3a to be formed on the mandrel 15 by a subsequent shaping action.

At this position, the funnel 26 does not obstruct insertion of the mandrel 15 into the pipe 1a and, firstly via the trumpet-shaped mouth 28 and then via the bell socket edge fitting, acts as a means for guiding and conveying the wall of the pipe 1a towards the surface of the mandrel 15, and this first mechanical action alone helps the wall of the bell socket 3a being formed to adhere to the mandrel 15.

After the mandrel 15 stops inside the end A of the pipe 1a, the control and drive unit 60 actuates the movement of the shaping flange 14 towards the end edge 13a of the bell socket 3a.

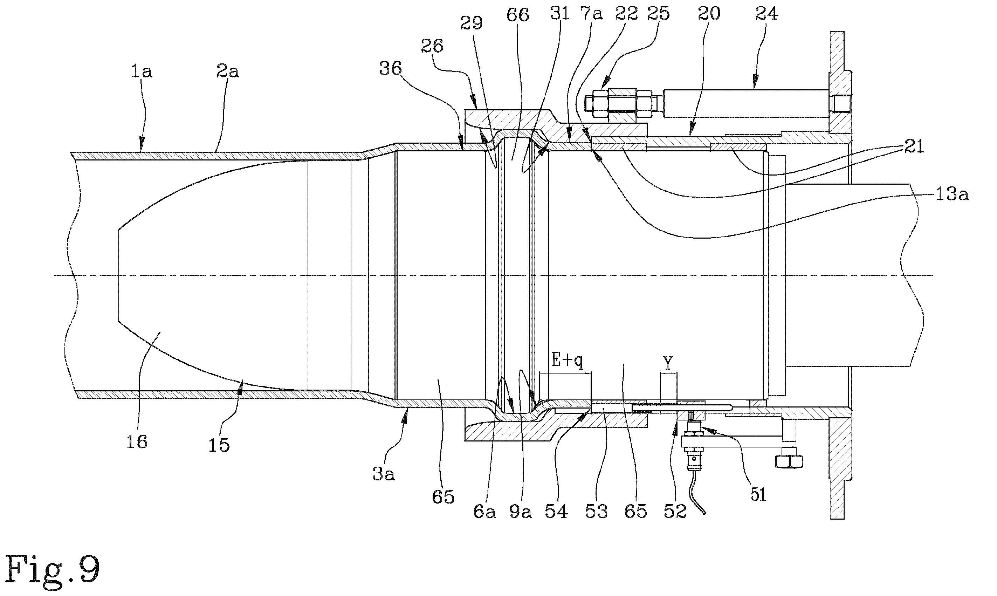

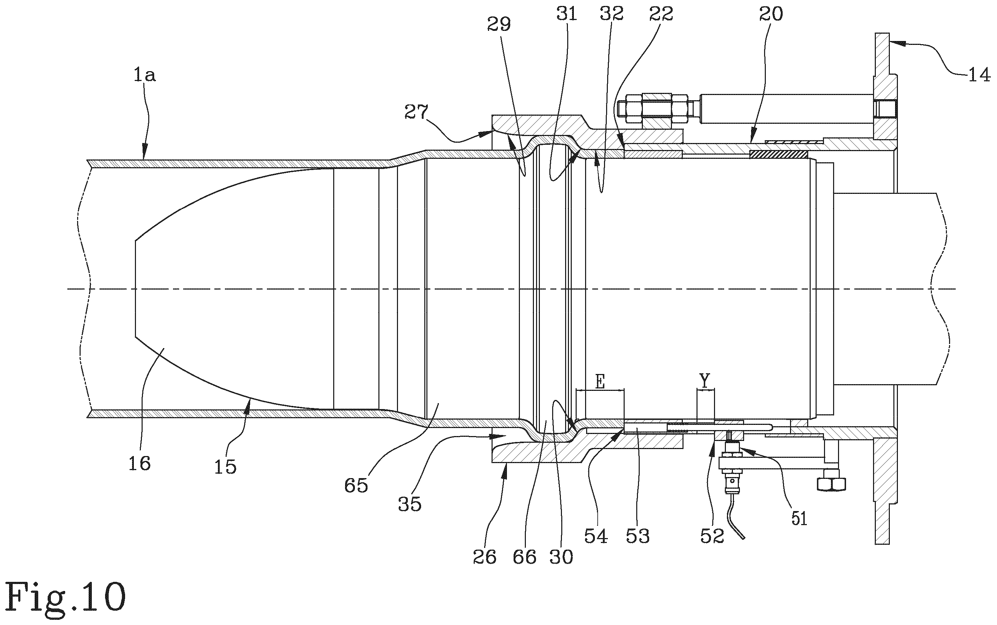

After the shaping flange 14 has travelled a stretch of stroke equal to Y, the shaping flange 14, with the edge 22 of its cylindrical collar 20, interacts with the end edge 13a of the pipe 1a (Figure 9) and shapes the end 13a of the bell socket edge 7a by compression along a defined stroke of length "q" (Figure 10).

During the movement of the shaping flange 14 along the stroke Y, the funnel 26 extends the containing action to the entire bell socket edge 7a and to the end surface 8a of the seat 6a of the gasket 100.

After travelling the stretch of stroke Y, the shaping flange 14 and the funnel 26, thanks to the tapered inside surface 30, interact with and shape the front side wall 9a of the seat 6a of the gasket 100.

The optimum length of the stroke Y, as reference for adjusting and fixing the position of the cam means 52 to the contact sensor 53, is determined by trial and error.

This value, for the same size of pipe 1 and integral bell socket 3, is dependent on the extent of spontaneous contraction typical of PVC-O material, that is to say, of the axial and circumferential orientation factor of the PVC-O of the pipe 1a to be belled.

It follows that it is precisely the spacing Y, created between the end edge 13a of the bell socket 3a and the flat front end 22 of the cylindrical collar 20 the moment the mandrel 15 stops, which makes the action of the funnel 26 effective both during insertion of the mandrel 15 into the pipe 1a and during the subsequent extension of the containing action outside the bell socket 3a.

After the shaping action, the wall of the bell socket 3a, at the end wall 8a of the seat 6a of the gasket 100, at the inclined front wall 9A of the seat 6a and at the bell socket edge 7a is contained, hence definitively shaped, by the action of the mandrel 15, of the inside surface 27 of the funnel 26 and by the flat front end 22 of the cylindrical collar 20.

The forming carriage 41 enables the shaping flange 14 to withdraw by a certain stroke so as to partly or completely disengage the funnel 26 from the bell socket 3 formed.

When the shaping flange 14 is at a fully withdrawn position, the bell socket 3 formed, adhering to the mandrel 15, is fully exposed to the cooling fluid emitted by ventilating means 44, making it more efficient and quicker to cool and solidify it.

The sizing of the mandrel 15 and of the shaping flange 14 in the traditional configuration of the apparatus 40 is determined by the inside dimensions specified for the bell socket 3.

The mandrel 15 is normally oversized to take into account the contraction due to thermal shrinkage of the bell socket 3 just removed from the mandrel 15.

It should be noted that the sizing does not change when the nominal thickness of the pipe 1a being processed changes, that is to say, the nominal outside diameter d1 of the pipe, when the nominal operating pressure (PN) changes, buffer 15 and crimping flange 14 do not need to be replaced.

The only exception is the nose-cone shaped end, called tip 16, of the mandrel 15. Since the tip 16 is calibrated as a function of the inside diameter of the pipe 1, its dimensions are correlated with the nominal thickness s1 of the pipe 1. Therefore, the tip 16 of the mandrel 15 is sized and replaced as a function of the nominal operating pressure (PN) of the pipe 1.

In the configuration of the belling apparatus 40 of the invention, the funnel 26 is also a component whose dimensions depend on the thickness of the pipe 1. Thus, when the nominal operating pressure (PN) of the pipe 1 changes, the funnel 26, like the tip 16 of the mandrel 15, must be replaced.

The optimal sizing of the inside surfaces 27 of the funnel 26 is determined, as an initial design reference, on the basis of the dimensions of the bell socket 3 formed on the mandrel 15, these being known dimensions because they are laid down in the conformity specifications of the bell socket 3.

The sizing is finalized by trial and error in tests aimed at defining the space that there has to be between the outside surface 36 of the mandrel 15 and the inside surfaces 27 of the funnel 26.

In this context, the important dimensions are those of the inside diameter of the containing surface at the seat 6 of the gasket 100 and at the bell socket edge 7; testing by trial and error allows identifying dimensional intervals as initial design references for the distance which must be created between these surfaces and the mandrel correlatively with the wall thickness s1 of the pipe (Figure 6a).

- G3: distance between mandrel surface 36 at gasket seat and inside surface 27 of funnel 26 for containing the surface of the end wall 8a of the seat 6a of the gasket 100.
- G2e: distance between mandrel surface 36 at bell socket edge and inside surface 27 of funnel 26 for containing the bell socket edge 7a.
- s1min: minimum wall thickness of the pipe 1a to be belled

- s1max: maximum wall thickness of the pipe 1a to be belled

$$s1min \leq G3 \leq 1{,}05s1max$$

$$1{,}05s1min \leq G2e \leq 1{,}15s1max$$

The relative longitudinal position W between the funnel 26 and flat front end 22 of the cylindrical collar 20 is also determined, as initial design reference, on the basis of the dimensions of the bell socket 3 formed on the mandrel 15, as laid down in the conformity specifications of the bell socket 3.

The position is also a function of the wall thickness of the pipe 1.

Also to be taken into account is the normal thickness range, a range which is known from the dimensional specifications of the pipe 1a to be belled.

The mechanical action of first conveying and then shaping the pipe wall between mandrel 15 and inside surface 27 of the funnel 26 and between the mandrel 15 and the flat front end 22 of the cylindrical collar 20 has as its effect that of forcing the distribution of the thickness that is created in the wall of the final bell socket 3 congruently with the shaping chamber 35 defined by the outside surface 36 of the mandrel 15, by the inside surface 27 of the funnel 26 and by the flat front end 22 of the cylindrical collar 20. In normal wall thickness ranges of the extruded pipe 1a, a few tests allow determining the optimum setting for the parameter W which fixes the relative longitudinal position between the funnel 26 and the flat front end 22 of the cylindrical collar 20 to obtain the shape of the bell socket 3 having the dimensions specified for the functional conformity of the bell socket 3.

EXAMPLE

PVC-O pipe with integral bell socket of PVC-O Z-joint type for operating pressures up to 16 Bar (PN16)

- d1= outside diameter of the pipe=222+0.6
- s1= pipe wall thickness= 6.2+0.9
- d2= inside diameter of the bell socket (up to the gasket seat)=222.8+1.2
- d2e= inside diameter of the bell socket edge=222.8+1.2
- d3= inside diameter of the gasket seat=247.7+1.4
- E= length of the bell socket edge=41.5
- M= length of the gasket seat=40.7
- U= length of the cylindrical bell socket up to the gasket seat=88.5
- Ra= inside connecting radius between the front side wall of the gasket seat and the bell socket edge =14.0 ±2
- Rp= inside connecting radius between the rear side wall of the gasket seat and the bell socket edge=14.0 ±2

- $\alpha a$= inclination angle of the front side wall of the gasket seat=33°±4°
- $\alpha p$= inclination angle of the rear side wall of the gasket seat=33°±4°
- $\beta$= taper angle of the tapering portion of the bell socket≈15°

From the dimensional specifications of the pipe, it emerges that the sizing of the shaping flange 14 must take into account that the thickness of the pipe wall can vary in the following range:
s1 min=6.2; s1 max=7.1

The shaping flange 14 as described herein is suitable for manufacturing the bell socket 3 having the following dimensional specifications with the following design parameters:

        W=46
        Y=15
        G3=7.2
        G2e=7.4

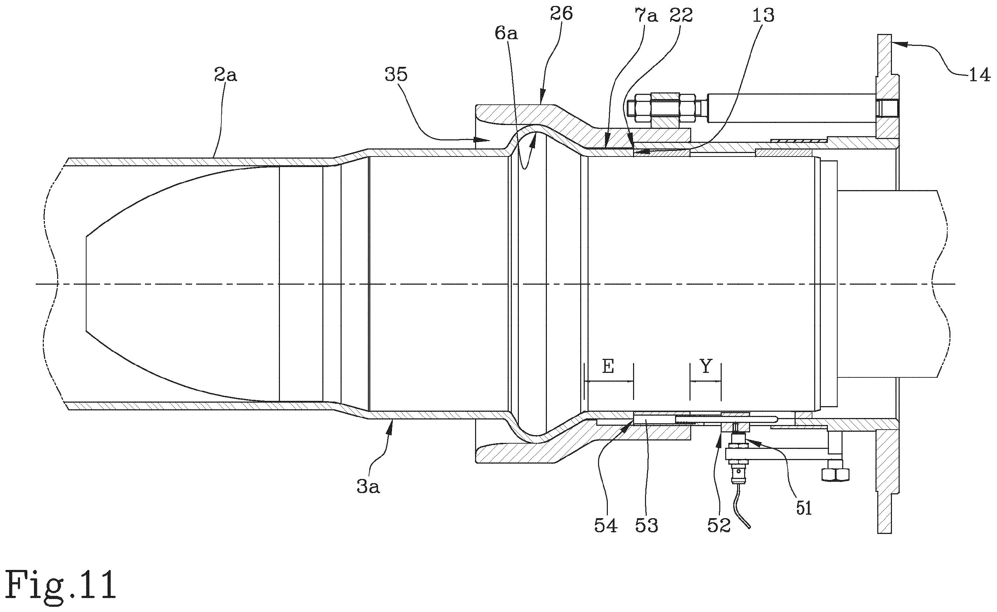

The apparatus, as described with reference to the bell socket of the "Z-joint" type, can be made for a bell socket of the "Anger-Lock" type, as shown in Figure 11.

The belling apparatus 40 of the invention may have a variant configuration (not illustrated) where the funnel 26 is disconnected from the cylindrical collar 20, while still serving to axially guide it.

Thus, in this variant of the shaping flange 14, the cylindrical collar 20 and the funnel 26 have respective movement means applied to the forming carriage 41, and therefore move relative to the mandrel 15 independently of each other.

Although it adds to the complexity of the machine, such a variant offers the advantage of greater operating flexibility and of making it easier to obtain a setup which can optimally coordinate the action of shaping the bell socket edge 7 with the action of shaping the inclined front wall 9a of the seat 6 of the gasket 100. In brief, in this variant of the invention, adjusting the relative position between the funnel 26 and the flat front end 22 of the cylindrical collar 20 as described above is not carried out manually, but instead, the control and drive unit 60 of the machine automatically controls the positions and relative movements of cylindrical collar 20 and funnel 26. Described below is the belling method implemented by the belling apparatus 40 of the invention as described in the foregoing.

Apparatus 40 installed in the belling station 600 of the belling machine 300 (Figure 12 and Figure 13).

The method is described in detail as a succession of process steps performed in the belling station 600 of the belling machine 300.

In the belling machine 300, the process of heating the end of the pipe 1a prior to forming the bell socket at the end of the pipe 1a is carried out in known manner in the one or more heating stations 500.

Distinctive features of the process of forming the bell socket 3 of the invention are three successive positions adopted by the shaping flange 14 relative to the mandrel 15 in the progressive performance of the process. Intermediate position of the shaping flange 14, with the mandrel 15 moving into the pipe 1a. Corresponds to the position for conveying the wall of the pipe 1a around the mandrel 15 by means of the funnel 26.

Advanced position of shaping flange 14, with mandrel 15 stationary relative to the pipe 1a. Corresponds to the position where the flat front end 22 of the cylindrical collar 20 has finished shaping the bell socket edge 7a and the funnel 26 is shaping the inclined front wall 9a of the seat 6a of the gasket 100.

Withdrawn position of shaping flange 14, with mandrel 15 stationary relative to the pipe 1a. Corresponds to the position where the funnel 26 and the cylindrical collar 20 are detached from the bell socket 3 which is fully formed on the mandrel 15.

Consistently with the dimensional specifications of the bell socket 3 to be made, that is, with the size of the bell socket to be made, the shaping flange 14 is configured with relative position W between the inside surface 27 of the funnel 26 and the flat front end 22 of the cylindrical collar 20, and with relative position between the free front of the contact sensor 53 and the flat front end 22 of the cylindrical collar 20.

Ev is the virtual extension of the edge of the bell socket in the mandrel 15, corresponding to the length of the bell socket edge 7 to specifications, plus the shaping stroke q, minus the stroke p needed to activate the sensor 51 for stopping the mandrel 15.

When the belling process starts, the shaping flange 14 is positioned at an intermediate position relative to the mandrel 15 so that the free front 54 of the contact sensor 53 is located at the edge 7a of the bell socket whose virtual length is:

$$Ev= E+q-p$$

EXAMPLE

If q is the shaping stroke of the shaping flange 14 and p the stroke of the contact sensor 53 which activates the sensor 51, in the example considered in the description of the apparatus 40, where:

    E=41.5
    W=46
    Y=15
    then the shaping stroke q=5 mm and the sensor activation stroke p=4mm.

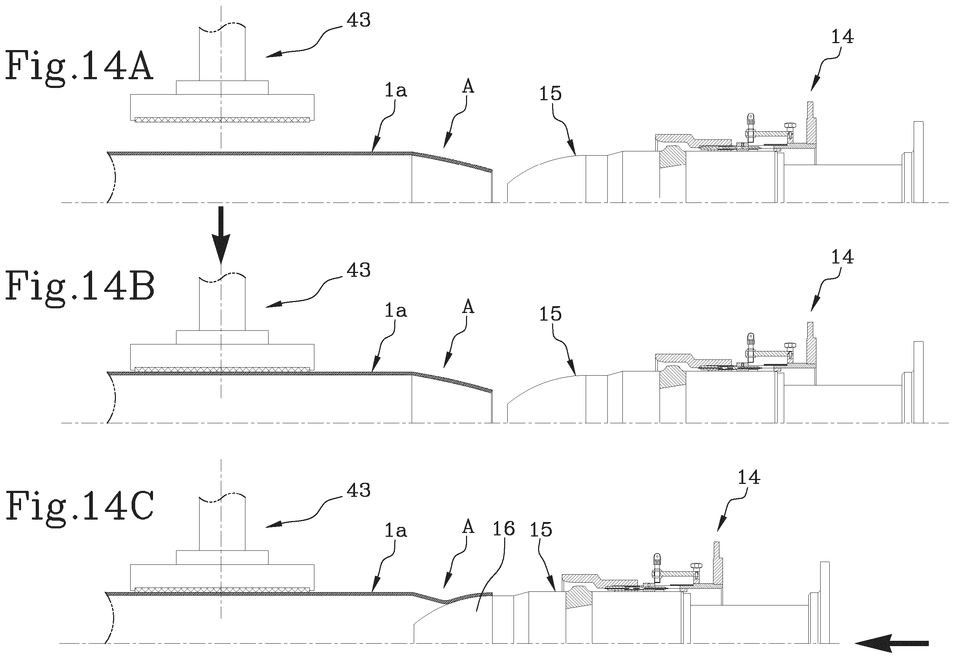

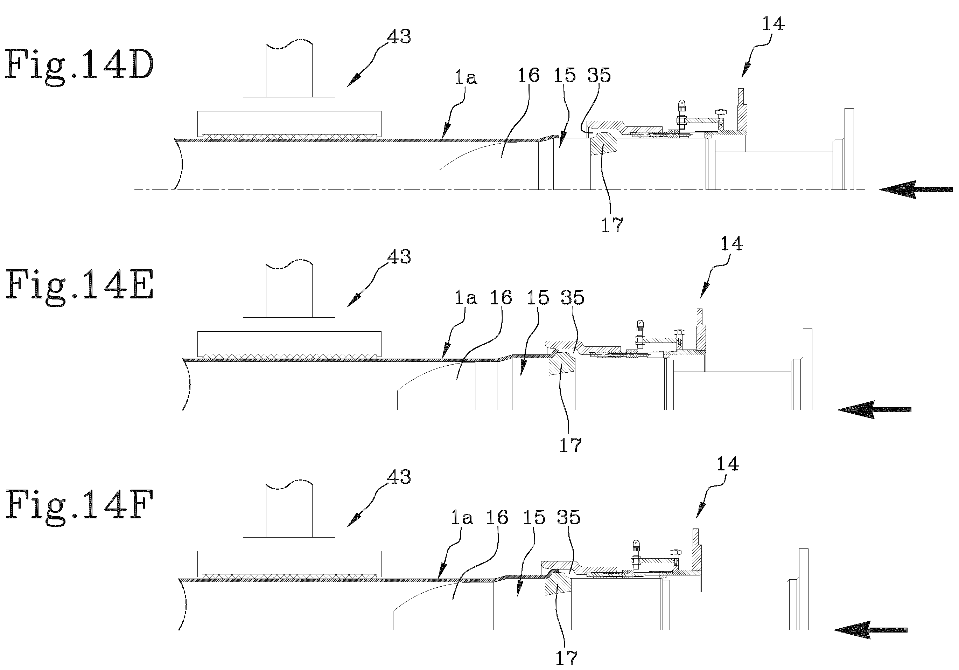

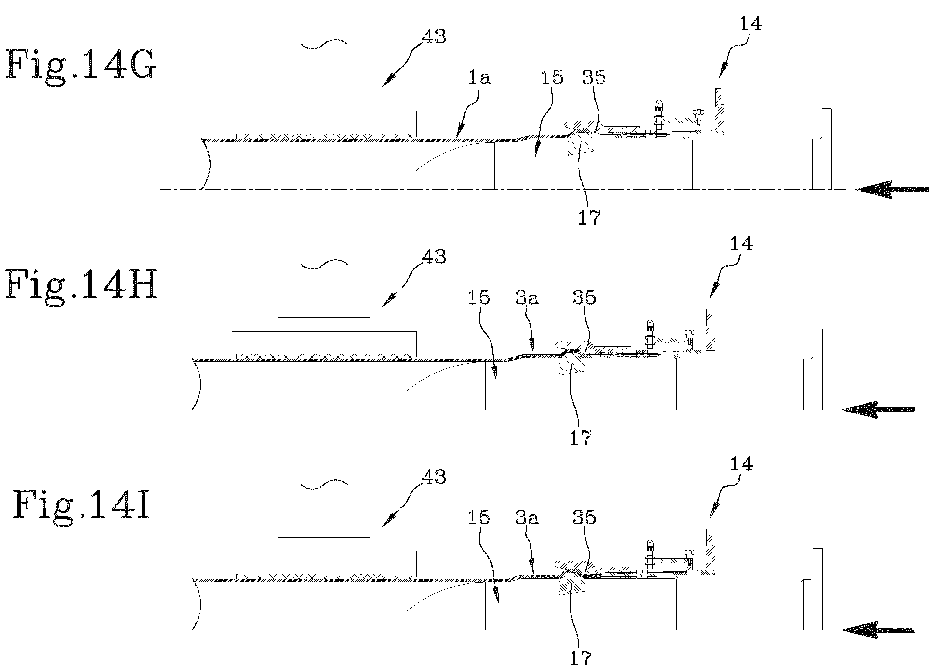

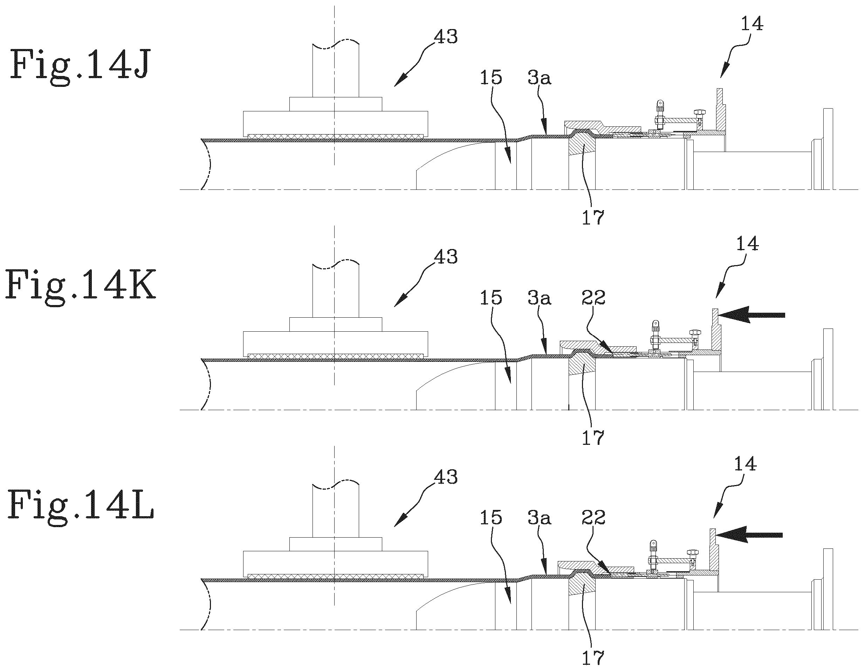

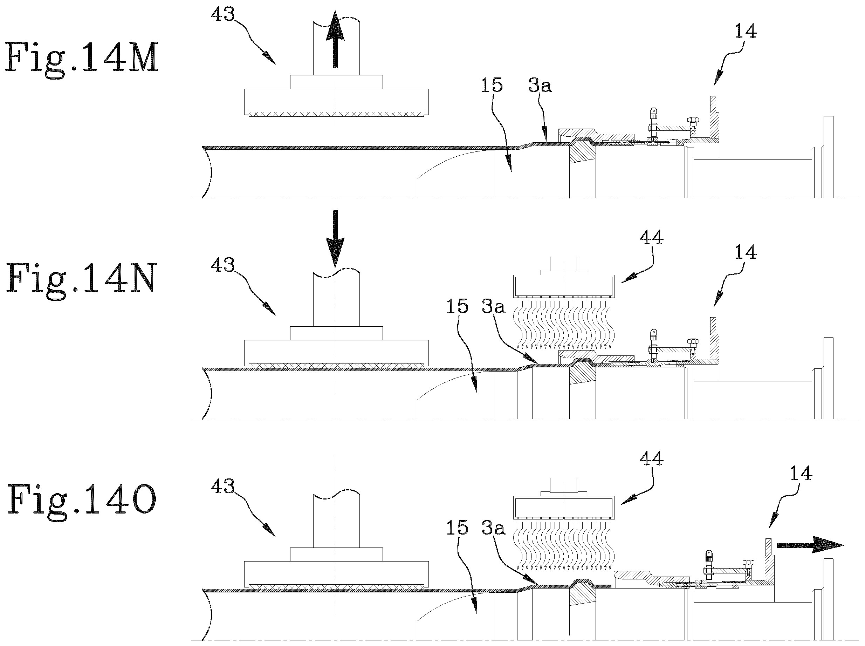

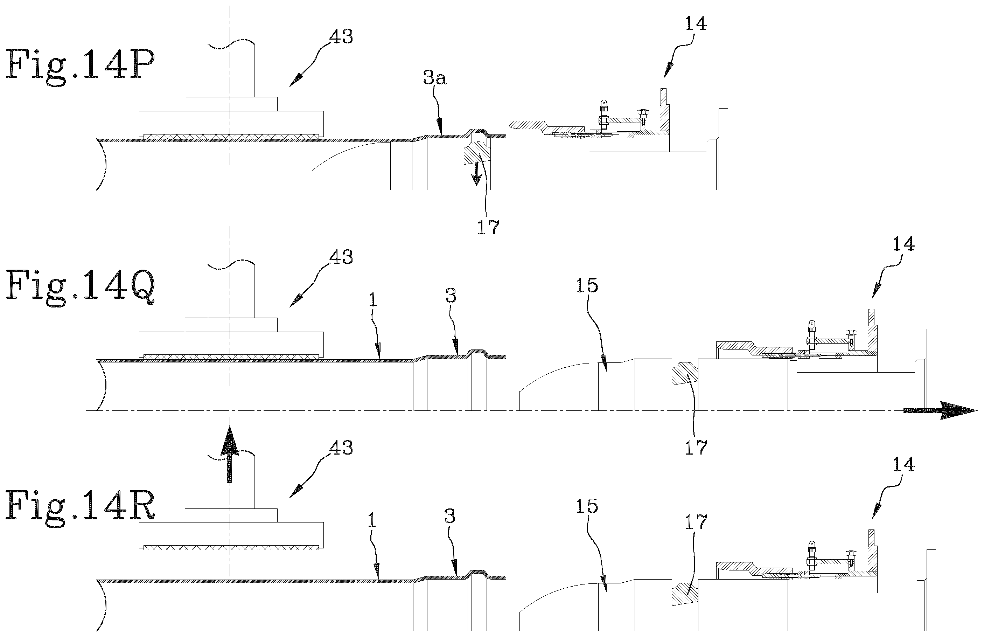

Listed below in alphabetical order are the process steps carried out in the belling station 600 (Figures 14A - 14R).

A. The pipe 1a to be processed is released from the last heating station 500 and the end of the pipe 1a, left free to contract, adopts the shape of a nose cone. In this state, the pipe 1a is positioned horizontally at the belling station 600.

B. The pipe 1a is gripped by clamps 43 so that the longitudinal axis L of the pipe 1a coincides with the axis of the forming means 59, that is, the axis 15a of the mandrel 15 and the axis 14a of the shaping flange 14.

C. The forming carriage 41 advances towards the end A of the pipe 1a. The mandrel 15 and the shaping flange 14 at an intermediate position, attached to the forming carriage 41, advance towards the end A of the pipe 1a.

D. As the forming carriage 41 advances, the mandrel 15 is inserted into the pipe 1a, starting from the tip 16, followed by the tapered part of the mandrel 15 and then the cylindrical part of the mandrel 15, preceding the segments 17.

E.- The forming carriage 41 continues advancing and the wall of the pipe 1a impacts and moves up along the inclined rear surface of the segments 17.

F. The wall of the pipe 1a conveyed and forced by the mouth 28 of the funnel 26 completely surmounts the segments 17 while remaining adjacent to them on account of the containing effect of the funnel 26.

G. As the forming carriage 41 progressively advances, the wall of the pipe 1a moves past the segments 17.

H. The forming carriage 41 continues to advance and the wall of the pipe 1a, still conveyed and forced by the funnel 26, is inserted into the compartment 69 of the chamber 35, delimited by the mandrel 15 and by the cylindrical surface 32 of the funnel 26 for containing the bell socket edge 7a.

I. The end edge 13a of the pipe 1a impacts the free front 54 of the contact sensor 53 (Fig. 7).

J. The cam means 52 connected to the contact sensor 53 interfere with the magnetic field of the proximity sensor 51 (Fig. 8). The sensor 51 is positively activated and, via the control and drive unit 60 of the belling machine 300, the corresponding activation signal 62 brings the forming carriage 41 to an immediate stop.

Once the forming carriage 41 has stopped, the shaping flange 14 starts moving.

K. As the shaping flange 14 advances, the funnel 26, which is attached to the shaping flange 14, extends the containing action of the bell socket 3a in the outside face of the end wall 8a of the seat 6a of the gasket 100 and at the bell socket edge 7a (Fig. 9). After travelling the stretch of length Y, the flat front end 22 of the shaping flange 14 contacts the end 13a of the edge of the bell socket 3a, while the tapering surface 30 of the funnel 26 contacts the outside face of the inclined front wall 9a of the seat 6a of the gasket 100.

L. The progressive advancing of the shaping flange 14, hence of the funnel 26 causes the wall of the bell socket 3a being formed to be shaped against the end edge 13a of the bell socket 3a and against the outside face of the inclined front side wall 9a of the seat 6a of the gasket 100, forcing the wall of the pipe 1a to adhere to it.

The containing action of the funnel 26 at the outside face of the end wall 8a of the seat 6a of the gasket 100 and at the bell socket edge 7a prevents the wall of the bell socket 3a from coming detached from the mandrel 15 (Fig. 10).

M. When the shaping flange 14 has reached the end of the shaping stroke, corresponding to the advanced position of the shaping flange 14, the control and drive unit 60 of the belling machine 300, instructs the shaping flange 14 to stop. The clamps 43 gripping the pipe 1a being formed are opened and, as a result, the axial compressive forces applied by the mandrel 15 and the shaping flange 14 on the walls of the pipe 1a cancel each other and any buckling produced by these forces are smoothed out.

N. The clamps 43 are re-closed and the bell socket 3a starts being cooled by ventilated air which is precooled by the diffuser 44.

O. The shaping flange 14 is pulled out of the formed bell socket 3, that is to say, it is moved to the withdrawn position where the funnel comes out of the bell socket 3 formed on the mandrel 15. The bell socket 3 is now fully exposed to the ventilated air and is cooled down completely.

P. When the formed bell socket 3 is cool, the segments 17 are retracted.

Q. The forming carriage 41 is withdrawn and thus the mandrel 15 is extracted from the formed bell socket 3.

R. The clamps 43 gripping the pipe 1 are opened and the pipe 1 with integral bell socket 3 is expelled from the belling machine 300.

The invention allows integral bell sockets to be made on PVC-O pipes intended for very high operating pressures from PN16 up to as much as PN25, with a mechanical mandrel system and with the most widely used gasket types, such as Z-joint and Anger-Lock.

The invention allows making bell sockets 3 according to specified functional conformity requirements for bell socket joints, with internal profile of the bell socket 3 which are precisely defined and repeatable even in normal wall thickness ranges of pipes 1a produced by extrusion and processed by the belling machine.

For pipes 1 with the same outside diameter for different nominal pipe operating pressures, that is to say, for pipes 1 with different nominal thicknesses, the invention allows the belling apparatus 40 to be changed over from one configuration to another by changing only two components: the funnel 26 and the tip 16 of the mechanical mandrel 15.

## Claims

1. A belling machine comprising a feed station (400) for feeding PVC-O pipes (1a) to be processed, one or more heating stations (500) for heating one of the ends of the PVC-O pipe (1a) to be processed and a forming station (600) for forming the end of the PVC-O pipe (1a) to be processed into the shape of a bell socket;

   when they leave the forming station (600), the PVC-O pipes (1) each have an integral bell socket (3) formed on it and provided with a seat (6) for receiving a gasket (100);
   the forming station (600) comprises a belling apparatus (40) for belling the end of the PVC-O pipe (1a) to be processed;
   the apparatus (40) comprises forming means (59) for forming the end of the pipe (1a) into a bell socket and which comprise a mechanical mandrel (15), intended to be inserted into one end of the pipe (1a) and a shaping flange (14) for shaping at least part of the end of the pipe (1a);
   the mandrel (15) and the shaping flange (14) are coaxial with each other; the shaping flange (14) is disposed around part of the outside surface (36) of the mandrel (15);
   the mandrel (15) has a tip (16) and a cylindrical portion (65) comprising expandable segments (17) which define an annular portion (64) extending from the cylindrical portion (65) of the mandrel (15);
   said annular portion (64) has an end wall (66), a front fitting (67) and a rear fitting (68), relative to the tip (16) and to the cylindrical surface (65) of the mandrel (15);
   movement means (41) move the shaping flange (14) relative to the mandrel (15) in translation parallel to the axis of the forming means (59) in a first feed direction and a second feed direction opposite of the first, and vice versa;
   **characterized in that**
   the shaping flange (14) comprises an annular body (26) whose inside surface (27) defines, with the outside surface (36) of the mandrel (15), a shaping chamber (35) for shaping a portion of the bell socket (3a) being formed; the shaping chamber (35) extends at least at the annular portion (64) of the mandrel (15) and has a blind bottom defined by a flat front end (22);
   the inside surface (27) of the annular body (26) is at least partly shaped to match the outside surface (36) of the mandrel (15) at the end wall (66) of the annular portion (64), at the rear fitting (68) and at the cylindrical surface (65) adjacent to the rear fitting (68).

2. The belling machine according to the preceding claim, **characterized in that**, starting from the outside towards the flat front end (22), the inside surface (27) of the annular body (26) has a mouth (28) convergent towards and smoothly merging with a first cylindrical surface (29) followed by a tapering surface (30); a curved fitting (31) convergent with the tapering surface (30) connects it to a second cylindrical surface (32).

3. The machine according to the preceding claim, **characterized in that** the second cylindrical surface (32) has a plurality of through openings (33) disposed circumferentially along the second cylindrical surface (32) itself.

4. The belling machine according to any one of the preceding claims, **characterized in that** the shaping flange (14) comprises a cylindrical collar (20) coaxial with the mandrel (15) whose end, considering a positioning plane orthogonal to the axis (15a) of the mandrel (15), is the flat front end (22) of the shaping chamber (35).

5. The belling machine according to any one of the preceding claims, **characterized in that**, to stop relative movement between the mandrel (15) and the shaping flange (14), a control and drive unit (60) is configured to receive an activation signal (62) of a sensor (51) configured to be activated when a relative position between the mandrel (15) and the shaping flange (14) has been reached; in the shaping chamber (35), there is a free front (54) of a sensor (53) intended to come into contact with the end (13a) of the bell socket edge (7a) being formed, which protrudes from the flat front end (22) of the shaping chamber (35) by a given length Y; the free front (54) of the sensor (53) is configured to create a retracting stroke of length p, which is less than Y and which is the limit for activating the sensor (51).

6. The machine according to the preceding claim, **characterized in that** elastic means (55) keep the contact sensor (53) at the rest position; the extension of the elastic means (55) is limited by cam means (52), restrained in an open slot (58) in an inside wall of the cylindrical collar (20) and disposed coaxially with the contact sensor (53); the cam means (52) define means for activating the sensor (51) whose activation signal (62) is sent to the control and drive unit (60).

7. The machine according to claim 5 or 6, **character-**

**ized in that** the control and drive unit (60), after receiving the activation signal (62), is configured to activate the movement means (42) which move the shaping flange (14) relative to the mandrel (15); the movement means (42) move the shaping flange (14) by a distance equal to the aforementioned length Y and by a defined shaping stroke q.

8. The machine according to any one of the preceding claims, **characterized in that** when the belling process starts in the forming station (600), the shaping flange (14) is disposed at an intermediate position relative to the mandrel (15) so that the free front (54) of the contact sensor (53) is located at the edge (7a) of the bell socket whose virtual length is:

$$Ev = E + q - p$$

where E is the length of the edge of the bell socket (3) of a finished pipe (1), q is the shaping stroke, and p is the retracting limit stroke for activating the sensor (51).

9. A belling method comprising a step of feeding PVC-O pipes (1a) to be processed, a step of heating one of the ends of the PVC-O pipe (1a) to be processed and a step of forming the end of the PVC-O pipe (1a) to be processed into the shape of a bell socket;

said bell socket (3a) being formed has a bell socket edge (7a) with a free end (13a) and a seat (6) for receiving a gasket (100) having an end wall (8a) and a pair of inclined side walls (9a, 10a); the step of forming comprises the following substeps:

- clamping the pipe (1a) at a horizontal position and leaving free the heated end to be formed;
- inserting a mechanical mandrel (15) into the free heated end so it is coaxial with the pipe (1a) until the end (13a) of the edge of the pipe (1a) impacts a free front (54) of a contact sensor (53);

**characterized in that** it comprises

- instructing the mandrel (15) to stop when the free front (54) of the sensor (53) has travelled the length of a retracting stroke p;
- activating the movement of a shaping flange (14) which has a shaping chamber (35) for containing the wall of the bell socket (3a) being formed at the outside face of the end wall (8a) of the seat (6a) of the gasket (100) and at the bell socket edge (7a);

as the shaping flange (14) travels the length of a stretch Y, the shaping chamber (35) contacts the end (13a) of the edge of the bell socket (3a) and the outside face of the inclined front wall (9a) of the seat (6a) of the gasket (100).

10. The belling method according to the preceding claim, **characterized in that** the shaping flange (14), after travelling the length of a stretch Y, travels the length of a stretch of the shaping stroke q, where the shaping chamber (35) shapes the wall of the bell socket (3a) being formed, the edge end (13a) of the bell socket (3a) and the outside face of the inclined front side wall (9a) of the seat (6a) of the gasket (100), forcing the wall of the pipe (1a) to adhere to the shaping chamber (35).

11. The belling method according to the preceding claim, **characterized in that** when the shaping flange (14) has reached the end of the shaping stroke, corresponding to the advanced position of the shaping flange (14), the method comprises a step of cooling the formed bell socket (3).

12. The belling method according to the preceding claim, **characterized in that** the step of cooling the formed bell socket (3) is carried out at least partly after a subsequent step of extracting the shaping flange (14) from the bell socket (3).

13. The belling method according to claim 11 or 12, **characterized in that** the step of cooling the formed bell socket (3) is followed by a step of extracting the mandrel (15), hence releasing the pipe (1) which has the integral bell socket (3) formed thereon.

Fig.1

Fig.1a

Fig.1b

Fig.2

Fig.2a

Fig.2b

Fig.3

EP 4 644 091 A1

Fig.4

EP 4 644 091 A1

Fig.4a

Fig.5

Fig.6

Fig.6a

EP 4 644 091 A1

$E_V = (E + q - p)$

14

51 58

53 55 56

13a

54

68

66

26

27

67

3a

Fig.7

Fig.8

Fig.9

Fig.10

Fig.11

EP 4 644 091 A1

Fig.12

Fig.13

Fig.14A

Fig.14B

Fig.14C

Fig.14D

Fig.14E

Fig.14F

EP 4 644 091 A1

Fig.14G

Fig.14H

Fig.14I

EP 4 644 091 A1

Fig.14J

Fig.14K

Fig.14L

EP 4 644 091 A1

Fig.14M

43    15    3a    14

Fig.14N

43    44    15 3a    14

Fig.14O

43    44    15 3a    14

Fig.14P

Fig.14Q

Fig.14R

Europäisches
Patentamt
European
Patent Office
Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2024/123675 A1 (TABANELLI GIORGIO [IT] ET AL) 18 April 2024 (2024-04-18) * figures 2c,4a-33,36 * ----- | 1-13 | INV. B29C57/04 |
| A | EP 3 077 177 B1 (IPM S R L [IT]) 24 October 2018 (2018-10-24) * the whole document * ----- | 1-13 | |

**TECHNICAL FIELDS SEARCHED (IPC)**

B29C

The present search report has been drawn up for all claims

| Place of search | Date of completion of the search | Examiner |
|---|---|---|
| Munich | 20 August 2025 | Schneider, Dominik |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 17 3731

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2025

| Patent document cited in search report | Publication date | Patent family member(s) | | Publication date |
|---|---|---|---|---|
| US 2024123675 A1 | 18-04-2024 | AU | 2022253587 A1 | 02-11-2023 |
| | | BR | 112023020707 A2 | 12-12-2023 |
| | | CA | 3213589 A1 | 13-10-2022 |
| | | CN | 117120243 A | 24-11-2023 |
| | | CR | 20230513 A | 31-01-2024 |
| | | EP | 4319961 A1 | 14-02-2024 |
| | | ES | 3029034 T3 | 23-06-2025 |
| | | US | 2024123675 A1 | 18-04-2024 |
| | | WO | 2022214986 A1 | 13-10-2022 |
| EP 3077177 B1 | 24-10-2018 | EP | 3077177 A1 | 12-10-2016 |
| | | HR | P20190082 T1 | 08-03-2019 |
| | | PL | 3077177 T3 | 31-07-2019 |
| | | TR | 201900854 T4 | 21-02-2019 |
| | | WO | 2015083102 A1 | 11-06-2015 |

**EP 4 644 091 A1**

**Patent documents cited in the description**

- EP 0930148 A
- WO 2022214980 A

- WO 2022214986 A